# EUROPEAN PATENT APPLICATION

(11) **EP 1 292 141 A1**
(43) Date of publication of application: **12.03.2003**
(21) Application number: 01120799.0
(22) Date of filing: 11.09.2001
(51) Int. Cl.: H04N 7/14, A47B 21/00

(54) **Communication device for use in a communications network**

(71) Applicant: The Procter & Gamble Company, Cincinnati, Ohio 45202 (US)
(72) Inventor: Daoud, Melek, 74564 Crailsheim (DE); Andres Rius, Gaspar, 74532 Ilshofen (DE); Shenoy, Ananth Colin, 05-510 Konstancin-Jeziorna (PL)
(74) Representative: Hirsch, Uwe Thomas M.H.

(57) **Abstract**

The present invention relates to a communications device for use in a communications network, comprising a videoconference unit (2) with internal audio and video sources and additional audio and video sources (9, 3) connectable to the videoconference unit (2). To provide a new and improved communications device that enables the user to communicated from different locations audio and video information obtained from different sources to other users, the communications device is included in a mobile transport unit (1) and the additional audio and video sources (9, 3) are connected to the videoconference unit (2) via switch means (20, 23) so as to switch between the different audio and/or video sources for selecting those sources which suit environmental conditions and/or tasks best.

## Description

### Field of the invention

The present invention relates to a communications device for use in a communications network, in particular a mobile videoconference device that can be used in combination with a wired or wireless LAN (Local Area Network) and LAN connection Gateway, i.e. a connecting module for connecting a wireless or a wired LAN to a ISDN telephone network and further through the ISDN telephone network to the Internet or to another wireless or wired LAN at a remote site.

### Background of the invention

In view of the improved capabilities of communications networks, in particular with increased transmission speeds telephone and videoconferences become more and more popular. Especially videoconferences are suitable for avoiding traveling costs and for reducing the time needed to discuss problems with remote partners.

Therefore, communications devices, especially videoconference devices have been developed that comprise a video conference unit with internal audio and video sources. Further, to improve the usability of conventional communications devices such as videoconference devices the videoconference unit thereof usually comprises additional input terminals for connecting additional audio and video sources.

However, videoconference devices are usually located in meeting rooms providing specific environmental conditions for videoconferences. Consequently, conventional videoconference devices are not suitable for being used in different locations. In addition, conventional videoconference devices cannot be easily adapted to different tasks, e.g. for enabling a user to participate a videoconference from a production site.

The object of the present invention is to provide a new and improved communications device for use in a communication network that enables the user to communicated from different locations audio and video information obtained from different sources to other users.

This object is achieved by the communications device according to claim 1. Additional refinements and developments are described in the dependent claims.

### Summary of the invention

According to the present invention a communications device is included in a mobile transport unit and the additional audio and video sources are connected to the video conference unit via switch means irrespectively of their location in the mobile transport unit or separate there from so as to switch between the different audio and/or video sources from the transportation unit for selecting those sources which suite environmental conditions and/or tasks best.

Thus, since the communications device according to the present invention is a mobile devices that can be used at different locations, it is possible to choose the locations from which a user will participate in a video conference can be selected very flexible. In particular, it is possible to use the communications device according to the present invention in a production floor or any other location and not only in a meeting room. Consequently, it is possible to present information, in particular video information, directly picked up at a production facility, to remote partners of a videoconference and discuss this information. Thus, the inventive communications device can be used for trouble shooting without the necessity that the experts therefore have to be at the location where the problems have occurred.

A specific refinement of the invention is characterized in that at least one headset including an earphone and a microphone is used as additional audio source, preferably including noise cancellation means, wherein the additional audio source is connected to the switch means by means of an air interface. In particular, the use of audio source connected by an air interface, i.e. of an additional audio source or headset with a wireless connection to the videoconference unit improves the flexibility of the device during use.

To increase the number of audio and video sources connectable to the video conference unit of the communications device, the switch means comprises internal switch means integrated in the videoconference unit as well as input and/or output selector circuits.

Furthermore, at least one external camera is connectable to a video input of the videoconference unit via a video selector circuit comprising a plurality of inputs for video sources. Especially, different kinds of external cameras can be used such as process monitoring cameras located at a production facility site, high-speed cameras used to slow down high speed production processes as well as any other suitable video camera.

According to a preferred embodiment of the present invention at least one of the external cameras is a mobile camera, in particular a mobile handheld camera that is connected to the video selector circuit via an air interface.

Further, it is possible that a computer, in particular a personal computer (PC) is connectable to an input of the video selector circuit via a VAG to PAL/NTSC converter. Furthermore, it is preferred that an videocassette recorder VCR is connected with its input to a corresponding output of the videoconference unit and with its output to a corresponding input of the videoconference unit via the video selector circuit.

To facilitate the use of the inventive communications device at any location it is provided that a communications output of the videoconference unit is connectable to a network via a communications connection selector which is preferable an auto sensing selector switch, wherein one of a plurality of outputs of the auto sensing selector switch is connected to an air interface module of a wireless network, in particular to a wireless local area network (LAN) that is preferably connectable to an ISDN communications network via a communications gateway module. The use of the gateway module makes it possible to dial any subscriber identification number, i. e. either an IP number of a LAN subscriber or an ISDN number of a subscriber of a public telephone network. In the latter case the gateway module is activated and dials the ISDN number to place a desired call.

### Drawings

The present invention will be explained in more detail below by way of example with reference to the drawing, in which:
Fig. 1 is a schematic illustration of a communications system using the communications device according to the invention, and
Fig. 2 shows a schematic block diagram of the communications device according to the invention.

In various figures of the drawing, mutually corresponding elements are provided with identical reference symbols.

### Detailed description of the invention in reference to the drawings

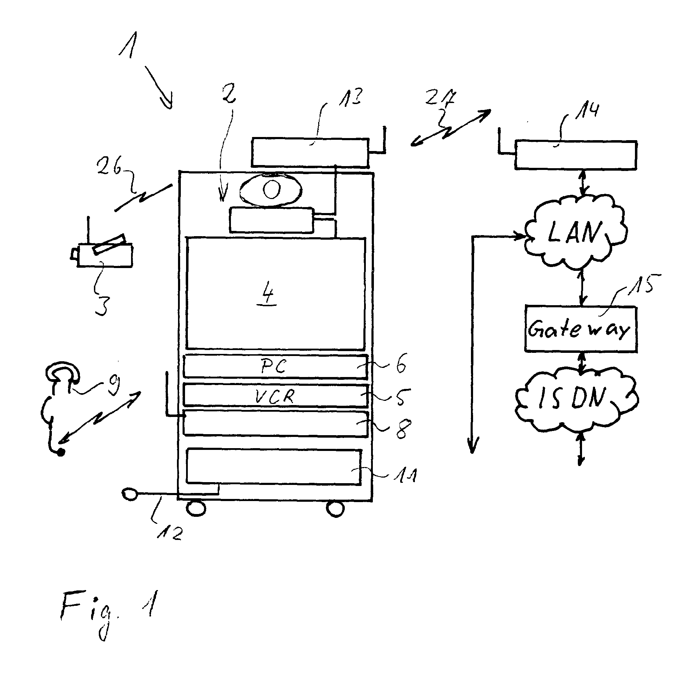

Fig. 1 shows a communications system including a communications device according to the present invention that is included in a self-contained mobile transport unit 1 comprising all audio and video equipment necessary for participating in a videoconference.

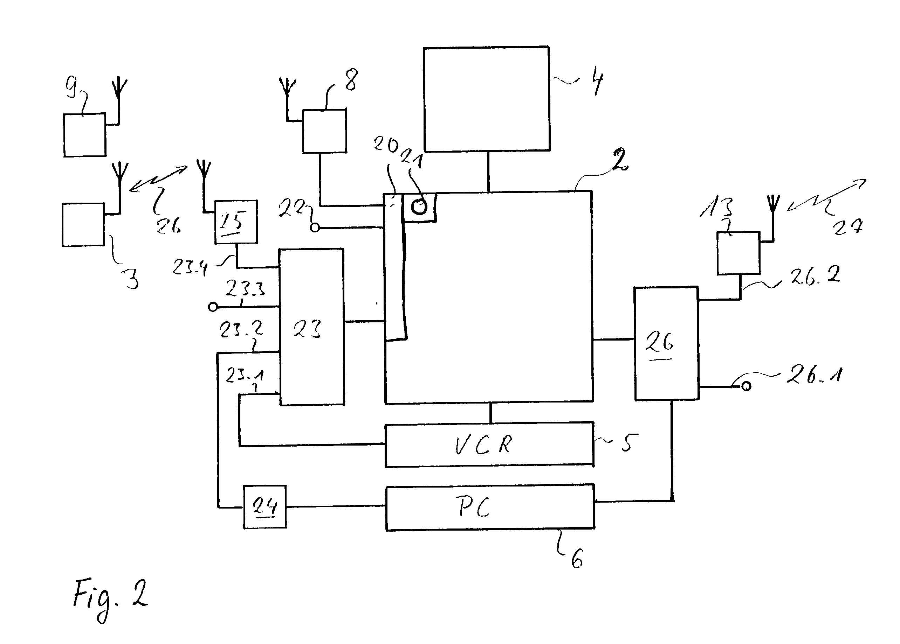

In a general embodiment, the transport unit 1 includes a videoconference unit 2 comprising a display monitor 4 for two-way video, i.e. a monitor with an integrated or associated video camera, e.g. 21" TV monitor with flat screen or alternatively multi standard-TV-monitor, a VCR (videocassette recorder) module 5 for transmitting videos and recording videoconference sessions e. g. a multi standard-VCR, a VGA connection (e.g. VAG to video converter 24 in Fig. 2) to share any data from an external computer e. g. a stationary or portable computer (PC or Laptop; not shown) or an internal computer PC 6, a video input (cf. video selector circuit 23 in Fig. 2) to receive video data from a handheld camera 3 and/or from external video sources (e.g. a process camera or a high-speed camera (not shown)), an audio station 8 to transmit audio data signals between up to four or even more wireless headsets 9 (only one is shown in the drawings) and the videoconference unit 2, and a stand alone power supply 11, i.e. an internal battery. In addition, a connection 12 to an external power supply is provided to use the transport unit 1 with an external power supply, if available.

The handheld camera 3 can be connected to the videoconference unit 2 by means of a line or wire. However, to allow more flexibility a wireless connection, i.e. an air interface using infrared light or radio frequencies is preferred.

For connecting the communications device according to the invention to a LAN an air interface, i.e. a wireless transmitting/receiving module 13 is preferably used that communicates with a respective wireless transmitting/receiving module 14 at the LAN side. The LAN communicates via a connection gateway module 15 enabling different connection methods (e.g. WAN (Wide Area Network) or ISDN) with videoconference devices in other sites.

As shown in Figure 2 the videoconference unit 2 comprises an internal switch means 20 having a first input connected with the audio station 8 for communicating with the headsets 9 via an air interface. Associated with the switch means 20 is a button 21 for switching off the internal audio source when one or more wireless headsets 9 with integrated noise cancellation are used when the communications device is operated in noisy environments.

Another input terminal 22 of the internal switch means 20 is provided for connecting external cameras like highs-peed camera or process monitoring camera. Furthermore, a video selector circuit 23 is connected with its output to another input of the internal switch means 20. The video selector circuit 22 comprises a plurality of inputs 23.1, 23.2, 23.3, 23.4 one 23.1 of which is connected to an output of a video cassette recorder VCR 5 the input of which is in turn connected to a video output of the video conference unit 2. Another input 23.2 of the video selector circuit 23 is connected to a personal computer PC 6 via a VGA to video (PAL/NTSC) converter 24. The personal computer PC is not necessarily integrated in communications device according to the present invention. Rather, it is important that the VGA to video (PAL/NTSC) converter 24 provides PC/Laptop connection so that a computer can be connected from the outside. A third input of the video selector circuit 23 is provided for connecting an external video source, in particular an external video camera for example a high-speed camera, a process camera or the like. A fourth input 23.4 is used with a receiver module 25 for receiving video data via an air interface 26 from a wireless handheld camera like a hand cam receiver. Further inputs may be provided, if necessary.

To connect the video conference unit to a network for participating in a video conference a communications output of the video conference unit 2 is connected with a communications connection selector 26 which is preferable an auto-sensing selector switch connecting its inputs selectively with its outputs 26.1, 26.2. One input is connected to a PC 6 output, whereas the other is connected to an output of the video conference unit 2. The first output 26.1 can be used to connect the inventive communications device with a network via a wired connection, i.e. via a suitable cable. The other output 26.2 is used with a receiving transmitting module 13 for communicating with a network via an air interface. Therefore, a wireless LAN transmission between the transmitter/receiver module 13 of the mobile communications device and the corresponding transmitting/receiving device 14 that is wired to the LAN can be performed for communicating information either from the video conference unit 2 or, if desired or necessary from the PC 6.

As can be seen from the description, the video conference unit 2 is the main part of the system. All different audio and video sources are connected directly or indirectly over the output of the video selector circuit 23 to the video input of the video conference unit 2.

From the videoconference unit 2 and over the communications connection selector 26 the connection to the LAN is established. This connection can be a wired connection using the first output 26.1 or a wireless connection using the receiving transmitting module 13 connected to the other output 26.2 to the network.

The connection to another, remote videoconference system of any kind can be done in different ways. First, the videoconference can use the LAN or a WAN only. However, it is also possible to use not only the local network but also a wired or wireless telecommunications network in case that the LAN to which the video conference device is connected is connected to an ISDN network or the like via a gateway module 15.

The communications device according to the present invention provides full control of a videoconference from presenter's location, e.g. production floor, meeting room or the like. In particular, it is possible for a user of the inventive system to setup a call for a videoconference and to perform complete camera control.

Furthermore, it is possible to switch between video and audio sources of mobile transport unit 1, such as a Polycom built-in camera associated with the display monitor 4, the handheld camera 3, VCR module 5, an external camera e. g. a process camera, and an internal PC 6 or an external computer. In particular, it is possible to simply switch over from normal microphone and loudspeakers used in meeting rooms to wireless headsets 9 with integrated noise cancellation by means of a button when the communications device is operating in noisy environments like a production floor. Thus, different audio input/output options are provided to suit noisy environments as well as normal meeting rooms.

If the inventive communications device is used with remote videoconference systems image and sound data are compressed just once at the videoconference unit 2 in the mobile transport unit 1 and then directly transmitted to the remote videoconference systems. If compressed data are received by the video conference unit 2 of the inventive communications device, these data are decompressed at the mobile videoconference unit 2 site. Therefore, it is possible to maximize the quality of image/sound received at other sites.

The use of a wireless LAN module makes it possible to communicate between videoconference unit 2 and other network devices, as remote computers or the like, and enables area of LAN coverage to be easily expanded.

## Claims

1. A communications device for use in a communications network, comprising a videoconference unit (2) with internal audio and video sources and additional audio and video sources (9, 3) connectable to the videoconference unit (2), **characterized in that** the communications device is included in a mobile transport unit (1) and the additional audio and video sources (9, 3), preferably contained in the mobile transport unit (1), are connected to the videoconference unit (2) via switch means (23, 20, 21) so as to switch between the different audio and/or video sources for selecting those sources which suit environmental conditions and/or tasks best.

2. The communications device according to claim 1, **characterized in that** at least one headset (9) including an earphone and a microphone is used as additional audio source, preferably including noise suppression means.

3. The communications device according to claim 1 or 2 **characterized in that** the additional audio source (9) is connected to the switch means (20) by means of an air interface.

4. The communications device according to claim 1, 2 or 3, **characterized in that** the switch means comprises internal switch means (20, 21) integrated in the videoconference unit (2) as well as input and/or output selector circuits (23, 26)

5. The communications device according to any one of the preceding claims, **characterized in that** at least one external camera is connectable to a video input of the videoconference unit (2) via a video selector circuit (23) comprising a plurality of inputs (23.1, 23.2, 23.3, 23.4) for video sources.

6. The communications device according to claim 5, **characterized in that** the external camera is a mobile camera, in particular a mobile handheld camera (3) that is connected to the video selector circuit (23) via an air interface (26).

7. The communications device according to claim 5 or 6, **characterized in that** a computer, in particular a stationary or portable personal computer (PC or Laptop) is connectable to an input of the video selector circuit (23) via a VAG to PAL/NTSC converter (24).

8. The communications device according to claim 5, 6 or 7, **characterized in that** a videocassette recorder (5) is connected with its input to a corresponding output of the videoconference unit (2) and with its output to a corresponding input of the videoconference unit (2) via the video selector circuit (23).

9. The communications device according to any one of the preceding claims, **characterized in that** a communications output of the videoconference unit (2) is connectable to a network via a communications connection selector which is preferable an auto sensing selector switch (26).

10. The communications device according to claim 9, **characterized in that** one of a plurality of outputs of the auto sensing selector switch (26) is connected to an air interface module (13) of a wireless network, in particular to a wireless local area network (LAN) that is preferably connectable to an ISDN communications network via a communications gateway module (15).
